# EUROPÄISCHE PATENTANMELDUNG

(11) **EP 1 022 627 A1**
(43) Veröffentlichungstag der Anmeldung: **26.07.2000**
(21) Anmeldenummer: 99118044.9
(22) Anmeldetag: 22.09.1999
(51) Int. Cl.: G05B 19/042

(54) **Vorrichtung und Verfahren zur Steuerung der Entkalkung einer Filtermaschinenheizung**

(30) Priorität: 13.01.1999 DE 19901011
(71) Anmelder: PCS Process Control Systems GmbH Gesellschaft für Steuerungs- und Automationstechnik, 79115 Freiburg (DE)
(72) Erfinder: Pollak-Diener, Gerhard, Dr., 82110 Germering (DE)
(74) Vertreter: Reinhard - Skuhra - Weise & Partner

(57) **Zusammenfassung**

Vorrichtung zur Steuerung der Entkalkung einer Filtermaschinenheizung mit einer Schalteinrichtung, die in dem Stromnetzanschluß der Filtermaschinenheizung geschaltet ist, und mit einer Zeitablaufsteuerung, die die Schalteinrichtung entsprechend einem abgespeicherten Zeitablauf betätigt.

## Beschreibung

Die Erfindung betrifft eine Vorrichtung und ein Verfahren zur Steuerung der Entkalkung einer Filtermaschinenheizung, und insbesondere die Steuerung der Entkalkung einer Kaffeemaschinenheizung.

Es ist allgemein bekannt, daß Kaffeemaschinen in gewissen Zeitabstängen mit üblichen Entkalkungslösungen, beispielsweise mit Zitronensäure, entkalkt werden müssen. Hierbei wird üblicherweise eine Entkalkungslösung in einen Vorratsbehälter der Kaffeemaschine eingefüllt und daraufhin die Kaffeemaschine für einige Minuten eingeschaltet, bis beispielsweise etwa die Hälfte der Entkalkungslösung aus dem Vorratsbehälter entnommen ist. Nunmehr wird die Kaffeemaschine für eine Zeitdauer von beispielsweise einer halben Stunde abgeschaltet, damit die Entkalkungslösung auf die Heizung der Kaffeemaschine einwirken kann. Nach Ablauf dieser Einwirkzeitdauer wird die Kaffeemaschine wieder eingeschaltet, und der Rest der in dem Vorratsbehälter der Kaffeemaschine befindlichen Entkalkungslösung wird der Heizung zugeführt. Nachdem diese Entkalkungslösung für eine bestimmte Zeit, beispielsweise eine halbe Stunde, auf die Heizung der Kaffeemaschine eingewirkt hat, wird die Kaffeemaschine mehrmals mit Wasser gespült.

Der oben beschriebene Entkalkungsvorgang muß in der Praxis je nach Verkalkungsgrad der Kaffeemaschine zwei- bis dreimal durchgeführt werden, bis die Funktion der Kaffeemaschine wieder einwandfrei gewährleistet ist. Hierbei sind jeweils die Einwirkwartezeiten einzuhalten, und es muß mehrmals eine neue Entkalkungslösung in den Vorratsbehälter eingefüllt werden. Das Durchsetzen der Entkalkungslösung in nur zwei Schritten führt dazu, daß derjenige Anteil der Entkalkungslösung, der nicht für längere Zeit auf die Heizung einwirken kann, die Heizung zu schnell passiert und damit schlecht ausgenutzt wird. Darüber hinaus kühlt während der Einwirkungszeit der Entkalkungslösung auf die Heizung aufgrund der abgeschalteten Heizung die Entkalkungslösung im Heizbereich der Kaffeemaschine sehr schnell ab, wodurch die Reaktionsgeschwindigkeit der Entkalkungslösung zur Ablösung des auf der Heizung abgelagerten Kalks sinkt.

Es ist daher die Aufgabe der vorliegenden Erfindung, eine Vorrichtung und ein Verfahren zur Steuerung der Entkalkung einer Filtermaschinenheizung zu schaffen, bei der sowohl die für den Entkalkungsvorgang erforderliche Zeit als auch die für den Entkalkungsvorgang erforderliche Menge an Entkalkungslösung erheblich reduziert werden.

Diese Aufgabe wird erfindungsgemäß durch eine Vorrichtung mit den im Patentanspruch 1 angegebenen Merkmalen sowie durch ein Verfahren mit den im Patentanspruch 14 angegebenen Merkmalen gelöst.

Weitere vorteilhafte Ausgestaltungen der erfindungsgemäßen Vorrichtung sowie des erfindungsgemäßen Verfahrens sind in den Unteransprüchen angegeben.

Die Erfindung schafft eine Vorrichtung zur Steuerung der Entkalkung einer Filtermaschinenheizung mit einer Schalteinrichtung, die in den Stromnetzanschluß der Heizung geschaltet ist, und mit einer Zeitablaufsteuerung, die die Schalteinrichtung entsprechend einem abgespeicherten Zeitablauf betätigt.

Bei einer bevorzugten Weiterbildung weist die erfindungsgemäße Entkalkungssteuervorrichtung einen Mikroprozessor mit einer Speichereinrichtung auf, in dem ein Zeitablauf für ein Steuersignal abspeicherbar ist.

Dies bietet den Vorteil, daß der Steuersignalzeitablauf in einfacher Weise einprogrammierbar ist.

Bei einer weiteren bevorzugten Weiterbildung der erfindungsgemäßen Steuervorrichtung weist die Zeitablaufsteuerung eine Steuerstufe auf, die ein Steuersignal zur Ansteuerung der Schalteinrichtung abgibt.

Dies bietet den Vorteil, daß das Steuersignal entsprechend den Anforderungen der Schalteinrichtung geformt wird.

Bei einer weiteren bevorzugten Weiterbildung der erfindungsgemäßen Steuervorrichtung besteht die Schalteinrichtung aus einem Triac.

Dies bietet den besonderen Vorteil, daß die Schalteinrichtung kontaktlos und verschleißfrei schaltet.

Darüber hinaus verbraucht der Triac selbst wenig Energie, so daß keine aufwendige und raumkostende Kühlung vorgesehen werden muß.

Bei einer weiteren bevorzugten Weiterbildung der erfindungsgemäßen Steuervorrichtung ist die Zeitablaufsteuerung mit einer Erfassungseinrichtung verbunden, die das Abschalten der Filtermaschinenheizung erfaßt.

Dies bietet den Vorteil, daß die Ablaufsteuerung sich automatisch abschaltet, ohne daß sie durch einen Benutzer per Hand separat abgeschaltet werden muß.

Gemäß einer weiteren bevorzugten Weiterbildung der erfindungsgemäßen Steuervorrichtung ist die Erfassungseinrichtung ein in dem Stromnetzanschluß geschalteter Strommeßwiderstand.

Dies hat den Vorteil, daß die Erfassung des Abschaltens der Filtermaschinenheizung einfach und sicher erfaßt wird.

Bei einer weiteren bevorzugten Weiterbildung der erfindungsgemäßen Steuervorrichtung schließt die Zeitablaufsteuerung die Schalteinrichtung für eine bestimmte erste Zeitdauer, und während einer bestimmten zweiten Zeitdauer wird die Schalteinrichtung derart angesteuert, daß sie entsprechend dem abgegebenen Steuersignal ein an der Filterheizung anliegendes periodisches Impulssignal erzeugt.

Bei einer weiteren bevorzugten Weiterbildung der erfindungsgemäßen Steuervorrichtung ist das an der Filterheizung anliegende periodische Impulssignal ein periodisches Impulspaket.

Bei einer weiteren bevorzugten Weiterbildung der erfindungsgemäßen Steuervorrichtung wird die auf die Filterheizung einwirkende Entkalkungslösung durch das periodische, an der Filterheizung anliegende Impulssignal auf einer konstanten optimalen Entkalkungstemperatur gehalten.

Gemäß einer weiteren bevorzugten Weiterbildung der erfindungsgemäßen Steuervorrichtung wird die auf die Heizung einwirkende Entkalkungslösung durch das Schließen der Schalteinrichtung für die erste Zeitdauer zum Kochen gebracht.

Gemäß einer weiteren bevorzugten Weiterbildung der erfindungsgemäßen Steuervorrichtung besteht die Entkalkungslösung aus einer Zitronensäurelösung.

Gemäß einer weiteren bevorzugten Weiterbildung der erfindungsgemäßen Steuervorrichtung ist der in der Zeitablaufsteuerung abgespeicherte Zeitablauf durch eine Eingabeeinrichtung eingebbar.

Dies bietet den Vorteil, daß die Ablaufsteuerung für verschiedene Filtermaschinen mit unterschiedlichen Heizleistungen ausgelegt werden kann.

Gemäß einer weiteren bevorzugten Weiterbildung der erfindungsgemäßen Steuervorrichtung ist die erste Zeitdauer, die zweite Zeitdauer, die Zeitdauer der Impulssignale und die Dauer der Impulse einstellbar.

Dies bietet den besonderen Vorteil, daß die erfindungsgemäße Steuerung für unterschiedliche Entkalkungslösungen mit unterschiedlichen optimalen Entkalkungstemperaturen ausgelegt werden kann.

Die Erfindung schafft ferner ein Verfahren zur Entkalkung einer Filtermaschinenheizung, bei dem
eine Entkalkungslösung zu der Filtermaschinenheizung zugeführt wird,
die Filtermaschinenheizung mit Energie für eine vorbestimmte Zeitdauer kontinuierlich versorgt wird, und
die Energieversorgung der Filtermaschinenheizung für eine vorbestimmte Zeitdauer periodisch unterbrochen wird.

Gemäß einer bevorzugten Weiterbildung des erfindungsgemäßen Entkalkungsverfahrens wird die kontinuierliche Energieversorgung und das periodische Unterbrechen der Energieversorgung mehrmals wiederholt.

Dies bietet den besonderen Vorteil, daß die Entkalkung beliebig gründlich durchführbar ist und sich der Benutzer während des Entkalkungsvorgangs anderen Tätigkeiten widmen kann.

Im weiteren werden bevorzugte Ausführungsformen der erfindungsgemäßen Entkalkungssteuervorrichtung und des erfindungsgemäßen Entkalkungsverfahrens zur Erläuterung erfindungswesentlicher Merkmale unter Bezugnahme auf die beigefügten Zeichnungen beschrieben.

Es zeigen:
- Fig. 1: eine erste Ausführungsform der erfindungsgemäßen Steuervorrichtung zur Entkalkung einer Filtermaschine;
- Fig. 2: eine weitere Ausführungsform der erfindungsgemäßen Steuervorrichtung zur Entkalkung einer Filtermaschine gemäß der Erfindung;
- Fig. 3: eine Zeitablaufsteuerung gemäß der Erfindung im Detail;
- Fig. 4A: ein Zeitablaufdiagramm des an der Filterheizung anliegenden Stromversorgungssignals;
- Fig. 4B: einen Ausschnitt des in Fig. 4A gezeigten, an der Filterheizung anliegenden Stromsignals.

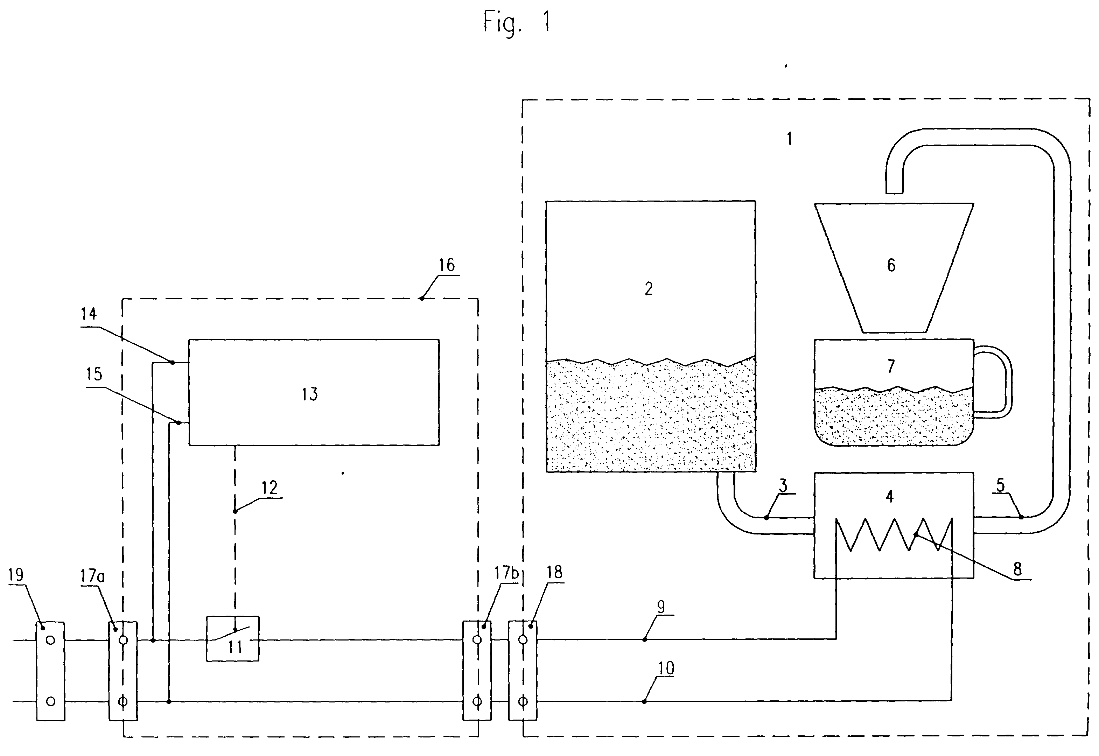

Fig. 1 zeigt eine erste Ausführungsform der erfindungsgemäßen Steuervorrichtung zur Steuerung der Entkalkung einer Filtermaschinenheizung.

Eine Filtermaschine 1, beispielsweise eine Kaffeefiltermaschine, weist einen Vorratsbehälter 2 auf, welcher über eine Zuführleitung 3 mit einer Heizung 4 verbunden ist. Die Heizung 4 gibt die über die Zuführleitung 3 zugeführte Flüssigkeit über eine Abgabeleitung 5 an einen in einem Filteraufsatz 6 befindlichen Filter ab. Die durch die Heizung 4 erhitzte Flüssigkeit tritt durch ein in dem Filter befindliches Material, beispielsweise ein pulverförmiges Material, wie Kaffee, hindurch, und fällt aufgrund der Schwerkraft in einen Aufnahmebehälter 7, bei dem es sich beispielsweise um eine Kaffeekanne handeln kann. Die Heizung 4 besitzt einen Heizwiderstand 8, welcher über Stromversorgungsleitungen 9, 10 an ein Stromnetz anschließbar ist. Eine Schalteinrichtung 11 ist in den Stromversorgungs-Phasenleiter 9 geschaltet und wird über eine Steuerleitung 12 durch eine Zeitablaufsteuerung 13 gesteuert. Die Zeitablaufsteuerung 13 wird ihrerseits über Stromversorgungsleitungen 14, 15 mit Strom versorgt.

Die Schalteinrichtung 11 und die Zeitablaufsteuerung 13 sind in einem eigenen Gehäuse 16, wie in Fig. 1 gezeigt, integrierbar, können jedoch auch bei der Herstellung der Kaffeemaschine direkt in das Gehäuse der Kaffeemaschine mit eingebaut werden.

Bei der in Fig. 1 gezeigten Ausführungsform besitzt die in dem Gehäuse 16 befindliche erfindungsgemäße Entkalkungssteuervorrichtung einen Eingangssteckeranschluß 17a und einen Ausgangssteckeranschluß 17b. Mittels des Eingangssteckers 17a ist die erfindungsgemäße Entkalkungssteuervorrichtung an ein Stromversorgungsnetz anschließbar, indem man es einfach in eine gewöhnliche Strom-Steckdose 19 einsteckt. Der Ausgangsstecker 17b ist vorzugsweise wie eine gewöhnliche Haussteckdose ausgebildet, so daß eine beliebige herkömmliche Kaffeemaschine 1 mittels eines Steckers 18 einsteckbar ist. Bei der in Fig. 1 gezeigten Ausführungsform kann eine herkömmliche Kaffeemaschine 1 mit der erfindungsgemäßen Entkalkungssteuervorrichtung nachgerüstet werden. Für den Entkalkungsvorgang wird die in dem Gehäuse 16 untergebrachte erfindungsgemäße Steuervorrichtung einfach zwischen die Kaffeemaschine 1 und die Hausstromsteckdose 19 geschaltet.

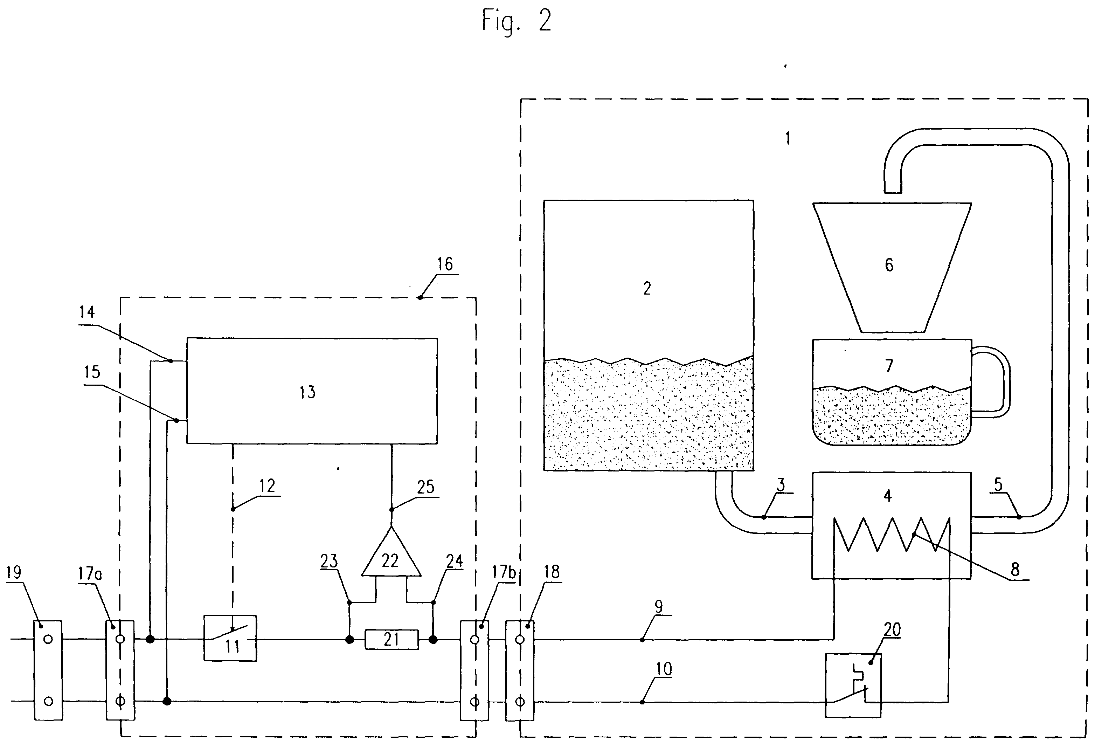

Fig. 2 zeigt eine weitere Ausführungsform der erfindungsgemäßen Entkalkungssteuervorrichtung, wobei gleiche Bauelemente mit gleichen Bezugszeichen versehen sind.

Bei der in Fig. 2 gezeigten Ausführungsform besitzt die Heizung 4 der Kaffeemaschine 1 einen Thermostaten 20, der die Kaffeemaschine abschaltet, wenn sich keine Lösung mehr in dem Vorratsbehälter 2 befindet. Das Abschalten der Kaffeemaschine wird bei der in Fig. 2 dargestellten Ausführungsform der erfindungsgemäßen Steuervorrichtung über einen Meßwiderstand 21 erfaßt. Ist die Kaffeemaschine 1 abgeschaltet, fließt über den Meßwiderstand 21 kein Strom, so daß an ihm kein Spannungsabfall auftritt. Ein Operationsverstärker 22 erfaßt über Abgreifleitungen 23, 24, daß an dem Meßwiderstand 21 kein Spannungsabfall auftritt, und gibt ein Erkennungssignal über eine Leitung 25 an die Zeitablaufsteuerung 13 ab. Die Zeitablaufsteuerung 13 erkennt somit automatisch, wenn sich keine Lösung mehr in dem Vorratsbehälter 2 befindet.

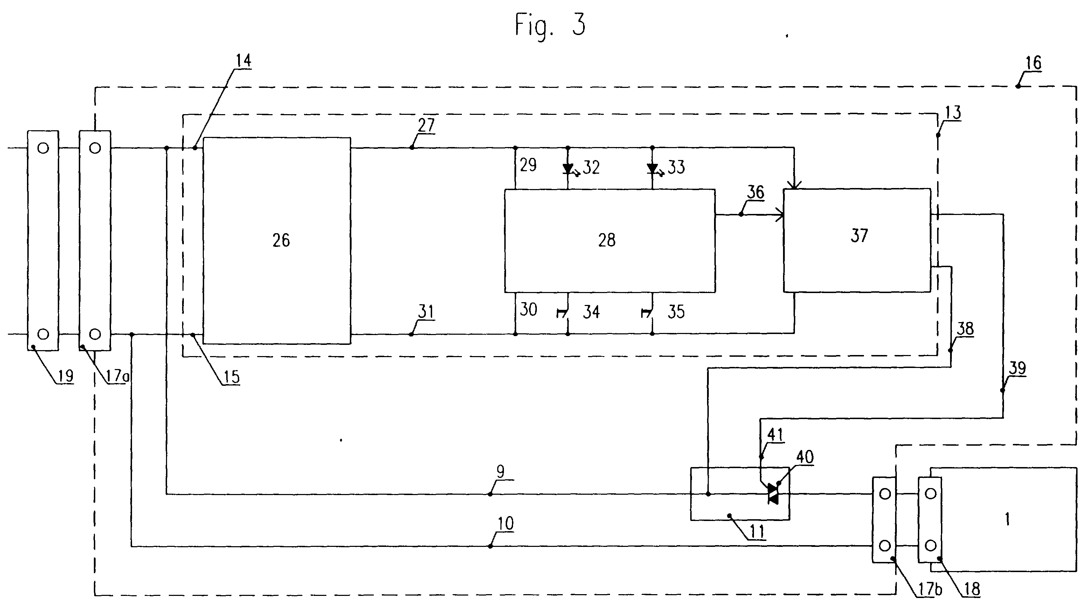

Fig. 3 zeigt die erfindungsgemäße Zeitablaufsteuerung 13 im Detail, sowie eine beispielhafte Ausführungsform der erfindungsgemäßen Schalteinrichtung 11, wobei gleiche Bauelemente, wie sie in den Fig. 1, 2 gezeigt sind, mit gleichen Bezugszeichen versehen sind.

Die Zeitablaufsteuerung 13 besitzt ein Netzteil 26, das über die Stromversorgungsleitungen 14, 15 über den Stecker 17 mit der Stromsteckdose 19 verbunden ist. Das Netzteil 26 der Zeitablaufsteuerung 13 liefert eine Versorgungsgleichspannung von beispielsweise 5 Volt an eine Spannungsversorgungsleitung 27. Ein Mikroprozessor 28 mit einem internen, nicht gezeigten Speicher ist über eine Leitung 29 mit der Spannungsversorgungsleitung 27 verbunden, und über eine Leitung 30 liegt der Mikroprozessor 28 an einer Masseleitung 31 an. Der Mikroprozessor 28 ist ferner an mehrere Leuchtdioden 32, 33 angeschlossen, die anzeigen, ob die Ablaufsteuerung 13 in Betrieb ist oder nicht. Über einen zwischen den Mikroprozessor 28 und der Masseleitung geschalteten ersten Schalter 34 wird die Zeitablaufsteuerung 13 eingeschaltet, und über einen zweiten Schalter 35 ist die Zeitablaufsteuerung 13 abschaltbar. Die beiden Schaltfunktionen der Schalter 34 und 35 können auch in einem Schalter integriert werden. Der Mikroprozessor 28 ist über eine Signalleitung 36 mit einer Zündstufe 37 verbunden, die über Zündsteuerleitungen 38, 39 die Schalteinrichtung 11 steuert. Bei der in Fig. 3 gezeigten Ausführungsform besteht die Schalteinrichtung 11 aus einem mit der Steuerleitung 39 verbundenen Triac 40. Der Triac 40 ist in die Phasen-Stromversorgungsleitung 9 geschaltet und läßt sich mit positiven und negativen Steuerströmen, die ihm über die Zündsteuerleitung 39 von der Zündstufe 37 zugeführt werden, zünden.

Durch das Stromversorgungsnetz wird über die Stromsteckdose 19 und die Stromversorgungsleitungen 9, 10 ein Wechselstromsignal mit einer Frequenz von 50 Hz abgegeben. Da der Triac bei jedem Nulldurchgang des Stromversorgungssignals abgeschaltet wird, muß die Zündstufe 37 pro Sekunde mindestens 100 Zündimpulse über die Zündsteuerleitungen 39 an den Steueranschluß 41 des Triacs 40 liefern, damit das Wechselstromsignal über den Stromversorgungsphasenleiter 9 an der Kaffeemaschine 1 anliegt.

In der Speichereinrichtung des Mikroprozessors 28 ist ein Zeitablauf für die Erzeugung des Zündsteuersignals 37 durch die Zündstoffe abgespeichert bzw. einprogrammiert. Die Zündstufe 37 liest den programmierten Zündsteuersignalablauf über die Leitung 36 aus und generiert ein entsprechendes Zündsteuersignal, welches über die Zündsteuerleitungen 38, 39 an die Schalteinrichtung 11 abgegeben wird.

Bei einer weiteren bevorzugten (nicht gezeigten) Ausführungsform weist die Ablaufsteuerung 13 eine Eingabeeinrichtung auf, durch die der Zündsteuersignal-Zeitablauf in die Speichereinrichtung des Mikroprozessors 28 einprogrammiert werden kann.

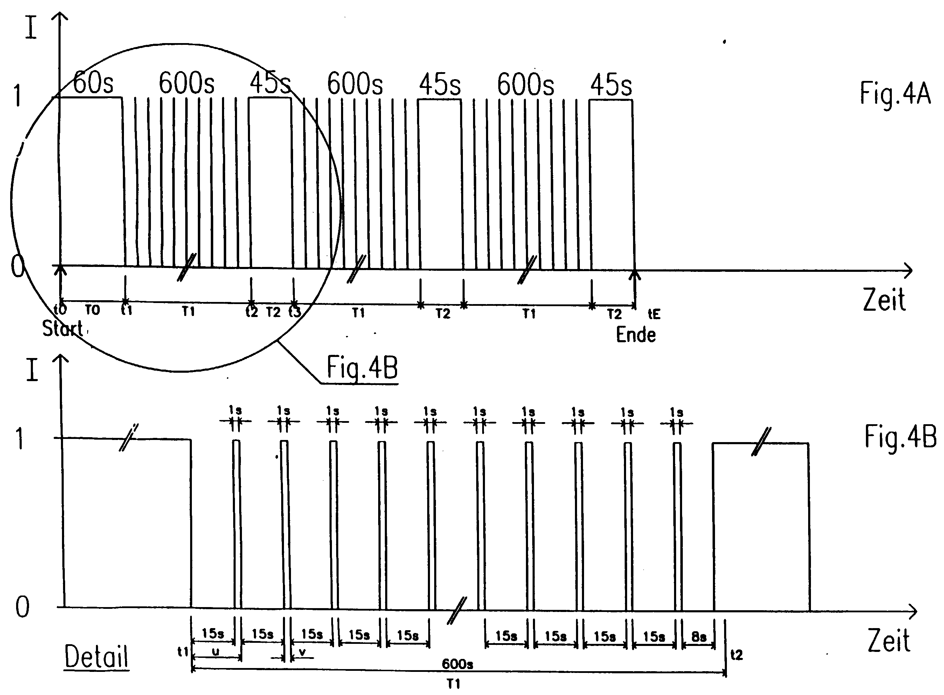

Fig. 4A zeigt ein Zeitablaufdiagramm, welches das an dem Heizwiderstand 8 der Heizung 4 über die Stromversorgungsleitungen 9, 10 anliegende Stromversorgungssignal darstellt. Zum Zeitpunkt t₀ wird die Ablaufsteuerung 13 eingeschaltet, und während der ersten Zeitdauer T₀ bis zum Zeitpunkt t₁ wird die Heizung 4 der Kaffeemaschine 1 aufgeheizt. Danach betätigt die Ablaufsteuerung 13 die Schalteinrichtung 11 derart, daß ein periodisches Impulssignal während einer zweiten Zeitdauer T₁ an dem Heizwiderstand 8 der Heizung 4 anliegt. Nach Ablauf der zweiten Zeitdauer T₁ wird zum Zeitpunkt t₂ die Schalteinrichtung 11 durch die Ablaufsteuerung 13 geschlossen, so daß der Heizwiderstand 8 kontinuierlich mit Strom versorgt wird. Nach Ablauf einer dritten Zeitdauer T₂ wird zum Zeitpunkt t₃ wiederum ein periodisches Impulssignal an den Heizwiderstand 8 angelegt. In dem in Fig. 4A gezeigten Beispiel beträgt die zweite Zeitdauer T₁ 600 Sekunden und die dritte Zeitdauer T₂ 45 Sekunden.

Fig. 4 B zeigt das während der zweiten Zeitdauer T₁ erzeugte periodische Impulssignal im Detail. Während der zweiten Zeitdauer T₁ werden periodisch Rechteckimpulse mit einer vorbestimmten Impulsdauer v erzeugt. Beispielsweise wird während der zweiten Zeitdauer T₁ alle 16 Sekunden ein Stromversorgungsimpuls von einer Sekunde Dauer an den Heizwiderstand 8 der Heizung 4 angelegt. Beträgt die Impulsdauer v eine Sekunde, so gelangen bei einem herkömmlichen Stromnetz mit einer Frequenz von 50 Hz 50 Stromwellen innerhalb der Impulsdauer v zu dem Heizwiderstand 8.

Durch das Aufheizen der Heizung 4 während der ersten Zeitdauer T₀ wird ein bestimmter Anteil der in dem Vorratsbehälter 2 befindlichen Entkalkungslösung in die Heizung 4 der Kaffeemaschine 1 über das Zuführrohr 3 gezogen und wirkt während der Zeitdauer T₁ auf die verkalkten Heizrohre ein. Während dieser Einwirkzeit T₁ wird die Heizung 4 aufgrund der periodischen Stromversorgungsimpulse auf einer konstanten optimalen Entkalkungstemperatur gehalten. Diese Entkalkungstemperatur wird durch das Verhältnis der Dauer der Rechteckimpulse v zur Periodendauer u der Impulse bestimmt. Je länger die Rechteckimpulse v im Vergleich zu der Periodendauer u sind, desto höher ist die Einwirkentkalkungstemperatur. Durch Festlegung eines Stromversorgungsimpulsablaufs bzw. eines zugehörigen Zündstromsteuersignal-Zeitablaufs in der Speichereinrichtung des Mikroprozessors 28 kann eine optimale Entkalkungseinwirktemperatur eingestellt werden. Hierzu ist bei einer bevorzugten Ausführungsform der erfindungsgemäßen Steuervorrichtung die erste Zeitdauer T₀, die zweite Zeitdauer T₁, die dritte Zeitdauer T₂, die Zeitperiode zwischen den Rechteckimpulsen u und die Dauer der Rechteckimpulse v einstellbar. Hierdurch ist eine optimale Entkalkungseinwirktemperatur für unterschiedliche Entkalkungslösungsmittel, beispielsweise eine Zitronensäurelösung, einstellbar.

Wie aus Fig. 4A hervorgeht, können eine Vielzahl von Entkalkungsvorgängen hintereinander ausgeführt werden. Bei dem in Fig. 4A gezeigten Beispiel werden drei Entkalkungsvorgänge während der Einwirkzeiten T₁ automatisch durchgeführt, ohne daß der Benutzer der Kaffeemaschine tätig werden muß. Bei einer notwendigen gründlichen Entkalkung der Kaffeemaschine können auch beispielsweise sechs Entkalkungsvorgänge hintereinander durchgeführt werden, wobei jeder Entkalkungsvorgang in dem in Fig. 4A gezeigten Beispiel in etwa 10 Minuten dauert. Der Benutzer kann, nachdem er die Entkalkung durch Betätigung der Zeitablaufsteuerung 13 in Gang gesetzt hat, die Kaffeemaschine verlassen und sich anderen Tätigkeiten widmen.

### Bezugszeichenliste:

- 1: Filtermaschine
- 2: Vorratsbehälter
- 3: Zuführrohr
- 4: Heizung
- 5: Abführrohr
- 6: Filteraufsatz
- 7: Aufnahmebehälter
- 8: Heizwiderstand
- 9: Stromversorgungs-Phasenleiter
- 10: Stromversorgungs-Nulleiter
- 11: Schalteinrichtung
- 12: Steuerleitung
- 13: Zeitablaufsteuerung
- 14: Stromversorgungsleitung
- 15: Stromversorgungsleitung
- 16: Gehäuse
- 17a, 17b: Stecker
- 18: Stecker
- 19: Strom-Steckdose
- 20: Thermostat
- 21: Meßwiderstand
- 22: Operationsverstärker
- 23: Leitung
- 24: Leitung
- 25: Leitung
- 26: Netzteil
- 27: Leitung
- 28: Mikroprozessor
- 29: Leitung
- 30: Leitung
- 31: Masseleitung
- 32: Leuchtdiode
- 33: Leuchtdiode
- 34: Taste
- 35: Taste
- 36: Leitung
- 37: Steuerstufe
- 38: Steuerleitung
- 39: Steuerleitung
- 40: Triac
- 41: Triac-Steueranschluß

## Patentansprüche

1. Vorrichtung zur Steuerung der Entkalkung einer Filtermaschinenheizung (4) mit
einer Schalteinrichtung (11), die in den Stromnetzanschluß der Filtermaschinenheizung (4) geschaltet ist, und mit
einer Zeitablaufsteuerung (13), die die Schalteinrichtung (11) entsprechend einem abgespeicherten Zeitablauf betätigt.

2. Vorrichtung nach Anspruch 1,
**dadurch gekennzeichnet**,
daß die Zeitablaufsteuerung (13) einen Mikroprozessor (28) mit einer Speichereinrichtung aufweist, in dem ein Zeitablauf für ein Steuersignal abgespeichert ist.

3. Vorrichtung nach Anspruch 1 oder 2,
**dadurch gekennzeichnet**,
daß die Zeitablaufsteuerung eine Steuerstufe (37) aufweist, die ein Steuersignal entsprechend dem in der Speichereinrichtung abgespeicherten Zeitablauf zur Ansteuerung der Schalteinrichtung (11) abgibt.

4. Vorrichtung nach einem der vorangehenden Ansprüche,
**dadurch gekennzeichnet**,
daß die Schalteinrichtung (11) ein Triac ist.

5. Vorrichtung nach einem der vorangehenden Ansprüche,
**dadurch gekennzeichnet**,
daß die Zeitablaufsteuerung (13) mit einer Erfassungseinrichtung (21) verbunden ist, die ein Abschalten der Filtermaschinenheizung (4) erfaßt.

6. Vorrichtung nach einem der vorangehenden Ansprüche,
**dadurch gekennzeichnet**,
daß die Erfassungseinrichtung (21) ein in dem Stromnetzanschluß (9) der Filtermaschinenheizung (4) geschalteter Strommeßwiderstand oder Stromwandler ist.

7. Vorrichtung nach einem der vorangehenden Ansprüche,
**dadurch gekennzeichnet**,
daß die Zeitablaufsteuerung (13) die Schalteinrichtung (11) zunächst während der ersten Zeitdauer T₀ und dann mehrmals während einer bestimmten zweiten Zeitdauer T₁ entsprechend dem Steuersignal zur Erzeugung eines periodischen, an der Filtermaschinenheizung (4) anliegenden Impulssignals ansteuert und für eine bestimmte dritte Zeitdauer T₂ schließt.

8. Vorrichtung nach einem der vorangehenden Ansprüche,
**dadurch gekennzeichnet,**
daß das periodische Impulssignal ein periodisches Rechteckimpulssignal ist.

9. Vorrichtung nach einem der vorangehenden Ansprüche,
**dadurch gekennzeichnet**,
daß durch das periodische Impulssignal eine auf die Filterheizung (4) einwirkende Entkalkungslösung auf einer konstanten optimalen Entkalkungstemperatur gehalten wird.

10. Vorrichtung nach einem der vorangehenden Ansprüche,
**dadurch gekennzeichnet**,
daß durch das Schließen der Schalteinrichtung (11) für die erste Zeitdauer T₀ und die dritte Zeitdauer T₂ die auf die Filterheizung (4) einwirkende Entkalkungslösung zum Kochen gebracht wird.

11. Vorrichtung nach einem der vorangehenden Ansprüche,
**dadurch gekennzeichnet**,
daß die Entkalkungslösung eine Zitronensäurelösung ist.

12. Vorrichtung nach einem der vorangehenden Ansprüche,
**dadurch gekennzeichnet**,
daß der in der Zeitablaufsteuerung (13) abgespeicherte Zeitablauf durch eine an die Zeitablaufsteuerung (13) angeschlossene Eingabeeinrichtung eingebbar ist.

13. Vorrichtung nach einem der vorangehenden Ansprüche,
**dadurch gekennzeichnet,**
daß die erste Zeitdauer T₀, die zweite Zeitdauer T₁, die dritte Zeitdauer T₂, die Zeitperiode u des Impulssignals und die Zeitdauer v der einzelnen Impulse einstellbar sind.

14. Verfahren zur Entkalkung einer Filtermaschinenheizung mit den folgenden Schritten:
(a) Zuführen einer Entkalkungslösung zu der Filtermaschinenheizung (4),
(b) kontinuierliches Versorgen der Filtermaschinenheizung (4) mit Energie für die vorbestimmten Zeitdauern T₀ und T₂, und
(c) periodisches Unterbrechen der Energieversorgung der Filtermaschinenheizung (4)für eine vorbestimmte Zeitdauer T₁.

15. Verfahren nach Anspruch 14,
**dadurch gekennzeichnet**,
daß die kontinuierliche Energieversorgung und das periodische Unterbrechen der Energieversorgung mehrmals wiederholt wird.
